# FASCICULE DE BREVET EUROPEEN

(11) **EP 3 645 393 B1**
(45) Date de publication et mention de la délivrance du brevet: **28.07.2021**
(21) Numéro de dépôt: 18729136.4
(22) Date de dépôt: 11.06.2018
(51) Int. Cl.: B64D 1/22, B64D 1/08, B64C 27/04, B66C 1/12, B64D 17/30, B64D 17/38

(54) **DISPOSITIF DE SÉCURISATION D'AU MOINS UNE ÉLINGUE DE TRANSPORT D'UNE CHARGE**
VORRICHTUNG ZUR BEFESTIGUNG MINDESTENS EINER SCHLINGE FÜR DEN TRANSPORT EINER LAST
DEVICE FOR SECURING AT LEAST ONE SLING FOR TRANSPORTING A LOAD

(30) Priorité: 28.06.2017 FR 1755971
(43) Date de publication de la demande: 06.05.2020
(73) Titulaire: Escape International, 75008 Paris (FR)
(72) Inventeur: DE FRANCE, Yves, 36110 Saint Martin de Lamps - Levroux (FR); BERTRAND, Gary, 93310 Le Pré Saint Gervais (FR); LAMOTTE, Eric, 75010 Paris (FR)
(74) Mandataire: Argyma
(86) Numéro de dépôt international: PCT/EP2018/065382
(87) Numéro de publication internationale: WO 2019/001941

(56) Documents cités:
- GB-A- 2 267 121
- US-A- 2 953 330
- US-A- 4 337 913

## Description

### DOMAINE TECHNIQUE GENERAL ET ART ANTERIEUR

La présente invention concerne le domaine du transport par hélicoptère sous élingues et, plus particulièrement, un dispositif de sécurisation d'une élingue de transport d'une charge.

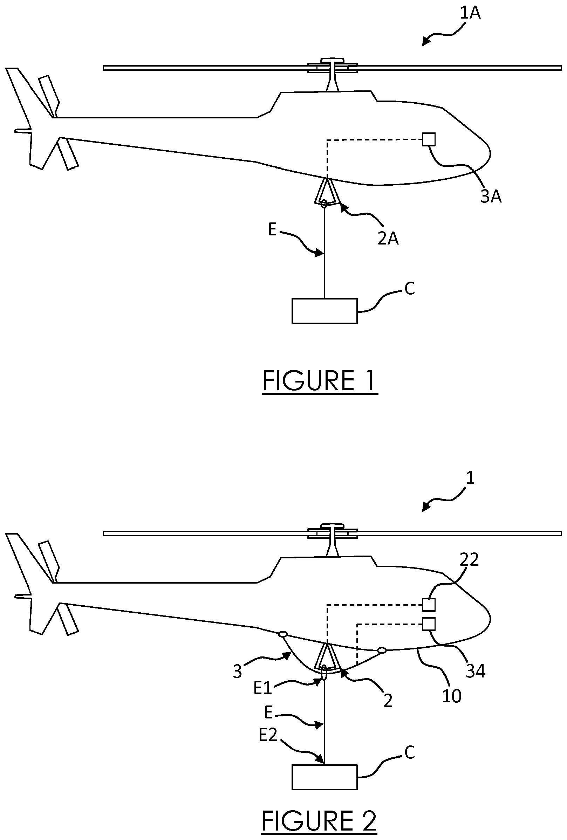

Aujourd'hui, il est connu de transporter du matériel, également désigné «charge», avec un hélicoptère. Lorsque la charge est trop volumineuse pour être transportée à l'intérieur de l'hélicoptère, il est connu de relier la charge sous l'hélicoptère à l'aide d'un câble, connu sous le terme « élingue », afin de soulever la charge pour la transporter. Dans ce but, en référence à la figure 1, un hélicoptère 1A comprend un dispositif de fixation, appelé crochet de charge 2A, auquel est reliée l'extrémité supérieure d'une élingue E, une charge C étant reliée à l'extrémité inférieure de l'élingue E. Le crochet 2A comprend un dispositif d'ouverture 3A adapté pour être actionné, de manière électrique ou mécanique, par un opérateur situé dans l'hélicoptère 1A. L'ouverture du crochet 2A libère l'extrémité supérieure de l'élingue E. Autrement dit l'élingue E est larguée avec la charge C en cas d'urgence, ou une fois la charge C déposée en fin d'opération. En pratique, il existe un risque que le crochet 2A s'ouvre accidentellement et libère l'élingue E sans que son dispositif d'ouverture 3A n'ait été actionné volontairement par un opérateur. La charge C est alors libérée à une altitude élevée, ce qui peut engendrer des endommages.

Aujourd'hui, il existe un besoin pour transporter des personnes sous élingues. Le risque d'ouverture accidentelle du crochet doit alors être éliminé.

Une solution serait de redonder le système d'ouverture en prévoyant deux crochets similaires équipés chacun d'un dispositif d'ouverture indépendant. Lors du transport d'une charge, l'élingue est accrochée à l'hélicoptère par les deux crochets et l'opérateur doit réaliser deux opérations indépendantes pour ouvrir les crochets. Bien que cette solution permette de réduire le risque de perte accidentelle de la charge, elle présente des inconvénients. En effet, redonder le système d'ouverture augmente le nombre d'éléments qui sont encombrants, lourds, complexes et coûteux à installer dans un hélicoptère. De plus, il n'est pas aisé d'installer un deuxième crochet et son dispositif d'ouverture dans un hélicoptère existant, notamment du fait des contraintes de certification.

Il existe donc un besoin pour un dispositif permettant de sécuriser une élingue afin d'éliminer le risque de largage accidentel tout en pouvant être installé dans des hélicoptères existant. Il est également nécessaire pour des raisons opérationnelles de pouvoir libérer manuellement la charge lorsqu'elle est retenue par le dispositif de sécurisation.

Dans un autre domaine technique étranger à celui du largage de charge, il est connu par la demande de brevet GB2267121 de supporter un opérateur à une élingue suspendue à un crochet d'un hélicoptère. La suspension est sécurisée par une sangle.

Dans un autre domaine technique étranger à celui du largage de charge, il est connu par la demande de brevet US 4337913 un système d'ouverture de parachute comportant des boucles.

### PRESENTATION GENERALE DE L'INVENTION

A cet effet, l'invention concerne un dispositif de sécurisation d'au moins une élingue de transport d'une charge sous un hélicoptère, ledit dispositif de sécurisation comprenant :
- au moins une première sangle et au moins une deuxième sangle, chaque sangle s'étendant longitudinalement et comportant une extrémité de solidarisation à l'hélicoptère et une extrémité de connexion,
- un mécanisme de connexion configuré pour, à l'état fermé, relier des extrémités de connexion des sangles pour former une sangle globale de sécurisation apte à supporter une élingue et, à l'état ouvert, libérer les extrémités de connexion des sangles pour larguer l'élingue, le mécanisme de connexion étant adapté pour résister à l'état fermé à un effort de traction de 1500kg, et
- un actionneur configuré pour ouvrir le mécanisme de connexion suite à un effort mécanique entrant, le mécanisme de connexion comprenant des moyens de réduction en cascade configurés pour réduire l'effort de résistance à l'ouverture du mécanisme de connexion induit par le support de l'élingue de manière à ce que l'effort mécanique entrant soit inférieur à 20kg pour un effort de traction de 1500kg induit par le support de l'élingue.

Grâce au dispositif de sécurisation, il est possible d'éliminer le risque de largage accidentel d'une charge transportée sous élingue grâce à la fixation de l'élingue à l'hélicoptère par le dispositif de sécurisation. Un tel dispositif de sécurisation peut être monté de manière rapportée sur un hélicoptère existant, ce qui limite le coût du gain en sécurité. Une telle sangle de sécurisation permet de redonder la fixation de l'élingue en plus d'un dispositif de fixation classique. Grâce à son mécanisme de connexion à réduction, le dispositif de sécurisation peut être ouvert de manière pratique et sans pénibilité par un opérateur pour larguer une charge. Ainsi, même en cas de dysfonctionnement du dispositif de fixation, la charge peut être larguée de manière optimale. L'actionneur permet de libérer la charge à distance du mécanisme de connexion. Par souci de concision, on entend par effort de traction de 1500 kg, un effort de traction d'une charge de 1500 kg supportée par une élinge.

Le mécanisme de connexion comporte une pluralité d'anneaux montés en cascade afin de réduire l'effort de résistance à l'ouverture du mécanisme de connexion généré par la charge reliée à l'élingue.

Le mécanisme de connexion comprend au moins un premier anneau, un deuxième anneau et un troisième anneau, le premier anneau présentant un diamètre supérieur à celui du deuxième anneau et le deuxième anneau présentant un diamètre supérieur à celui du troisième anneau, le premier anneau étant articulé au niveau de l'extrémité de connexion de la première sangle tandis que le deuxième et troisième anneaux sont articulés au niveau de l'extrémité de connexion de la deuxième sangle.

De manière préférée, le deuxième anneau est agencé pour bloquer le premier anneau et le troisième anneau est agencé pour bloquer le deuxième anneau. De préférence, l'actionneur est adapté pour bloquer le troisième anneau lorsque le mécanisme de connexion est à l'état fermé. Ainsi, les anneaux sont montés de manière à permettre une ouverture en cascade. Le déplacement d'un anneau de petites dimensions permettant de libérer les anneaux de grandes dimensions. Un anneau de grandes dimensions permet de supporter des efforts mécaniques importants tandis qu'un anneau de petite dimension peut être déplacé avec un effort réduit. Ainsi, l'agencement des anneaux permet de réaliser une réduction de l'effort de résistance à l'ouverture du mécanisme de connexion généré par la charge reliée à l'élingue s'opposant à l'effort entrant.

Selon un aspect de l'invention, les moyens de réduction comprennent plus de trois anneaux de manière à réduire la valeur de l'effort de résistance à l'ouverture.

De manière préférée, le mécanisme de connexion est configuré pour réduire l'effort de résistance à l'ouverture du mécanisme de connexion généré par la charge reliée à l'élingue par un facteur de réduction supérieur à 70, de préférence, supérieur à 100, pour un effort de traction, induit par la charge, de l'ordre de 1500kg. Ainsi, une charge de masse importante peut être larguée manuellement par un unique opérateur et sans risque pour lui en cas de dysfonctionnement. De manière préférée, l'actionneur est adapté pour recevoir un effort mécanique entrant de traction par un opérateur. Autrement dit, un effort mécanique manuel est suffisant pour ouvrir le dispositif de sécurisation du fait des moyens de réduction. Une libération mécanique manuelle est avantageuse étant donné qu'elle peut être réalisée en cas de défaillance des équipements électriques. En outre, du fait de son ouverture manuelle, le dispositif de sécurisation peut être monté dans un hélicoptère existant sans subir de modification structurelle donc sans nouvelles étapes de certification, ce qui procure un gain de temps et financier significatif.

De manière préférée, le mécanisme de connexion est configuré pour résister à un effort de traction de 5 000 kg, de préférence encore 6000 kg.

De manière préférée, l'effort mécanique entrant est supérieur à 1kg pour libérer une charge de l'ordre de 1500 kg. Contrairement à un mécanisme de connexion à réduction existant dans d'autres domaines techniques ne supportant que de faibles charges, le mécanisme de connexion à réduction selon l'invention est agencé pour recevoir un effort supérieur à 1kg, de préférence supérieur à 5kg, de préférence encore de l'ordre de 15kg, pour libérer une charge de l'ordre de 1500 kg. Un tel effort demeure important mais permet de réduire la complexité du mécanisme de connexion à réduction.

Selon un aspect de l'invention, les extrémités de solidarisation des sangles (première sangle et deuxième sangle) sont reliées ensemble de manière à former une boucle qui peut être suspendue à un organe de l'hélicoptère, notamment, au crochet de charge.

Selon un autre aspect de l'invention, le dispositif de sécurisation comporte une troisième sangle adaptée pour se connecter aux extrémités de solidarisation de la première et de la deuxième sangle de manière à former une boucle de sécurisation adaptée pour être suspendue à une partie de l'hélicoptère. Ainsi, lorsque la première sangle et la deuxième sangle ne peuvent pas être reliées directement au châssis structural d'un hélicoptère, une troisième sangle peut être ajoutée afin de réaliser une boucle de suspension. Une telle troisième sangle est particulièrement avantageuse pour mettre en place le dispositif de sécurisation sur un hélicoptère existant sans affecter sa structure.

L'invention concerne également un hélicoptère comprenant un châssis structural, un dispositif de fixation, fixé au châssis structural, configuré pour supporter une élingue et la libérer de manière commandée, et un dispositif de sécurisation tel que présenté précédemment, dont les extrémités de solidarisation de la première et de la deuxième sangle sont fixées audit châssis structural pour sécuriser le support de l'élingue par l'hélicoptère.

Grâce à l'invention, un hélicoptère existant peut être équipé d'un dispositif de sécurisation rapporté qui peut en outre être ouvert de manière pratique afin de larguer la charge de manière optimale. La sécurité de la charge est grandement améliorée.

L'invention concerne en outre un procédé de sécurisation d'une élingue montée sous un hélicoptère tel que présenté précédemment, le procédé comprenant :
- une étape de liaison du dispositif de fixation à une élingue, et
- une étape de liaison du dispositif de sécurisation à l'élingue de manière à sécuriser son support par l'hélicoptère.

Un tel procédé de sécurisation permet de suppléer un dispositif de fixation traditionnel pour sécuriser la charge en cas de dysfonctionnement.

### PRESENTATION DES FIGURES

L'invention sera mieux comprise à la lecture de la description qui va suivre, donnée uniquement à titre d'exemple, et se référant aux dessins annexés sur lesquels :
- La figure 1 est une vue schématique d'un hélicoptère selon l'art antérieur,
- La figure 2 est une vue schématique d'un hélicoptère selon l'invention,
- La figure 3 est une vue schématique d'un dispositif de fixation monté sur l'hélicoptère de la figure 2,
- La figure 4 est une vue schématique d'une première forme de réalisation d'un dispositif de sécurisation selon l'invention monté sur l'hélicoptère de la figure 2,
- Les figures 5 à 7 sont des vues schématiques de différentes étapes d'ouverture du dispositif de sécurisation,
- La figure 8 est une vue schématique d'une première forme de fixation du dispositif de sécurisation à un hélicoptère,
- La figure 9 est une vue schématique d'une deuxième forme de réalisation du dispositif de sécurisation à un hélicoptère, et
- Les figures 10 à 12 sont des vues schématiques de différents scénarios d'utilisation du dispositif de sécurisation.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

En référence à la figure 2, il est représenté un hélicoptère 1 selon l'invention qui comprend un châssis structural 10 définissant un habitacle intérieur depuis lequel un opérateur peut piloter l'hélicoptère 1. L'hélicoptère 1 est adapté pour transporter une charge C. Dans cet exemple, la charge C possède un volume important et ne peut pas être transportée dans l'habitacle de l'hélicoptère 1.

Dans ce but, la charge C est suspendue sous l'hélicoptère 1 par une élingue E. L'élingue E s'étend longitudinalement et possède une extrémité supérieure E1, reliée à l'hélicoptère, et une extrémité inférieure E2, reliée à la charge C. La charge C comprend un point de préhension auquel est accrochée l'extrémité inférieure E2 de l'élingue E. De préférence, l'élingue E comprend une boucle au niveau de son extrémité supérieure E1 afin de permettre sa fixation à l'hélicoptère 1. Dans cet exemple, il est présenté une charge C reliée à l'hélicoptère 1 par une unique élingue E mais il va de soi qu'elle pourrait être reliée par plus d'une élingue E.

De manière connue, en référence à la figure 2, l'hélicoptère 1 comprend un dispositif de fixation 2 configuré pour supporter une élingue E et la libérer de manière commandée. Un tel dispositif de fixation 2 est connu de l'homme du métier, notamment sous la désignation de «crochet de charge », « crochet à système de délestage », « crochet cargo » ou « crochet hook ». De manière connue, le dispositif de fixation 2 est fixé sur le châssis structural 10 de l'hélicoptère 1 de manière à lui transmettre les efforts mécaniques.

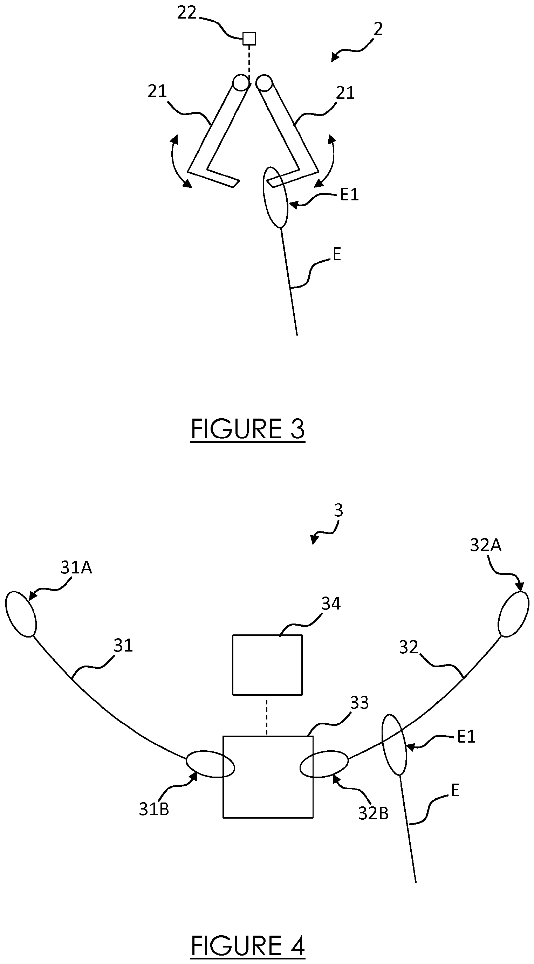

En référence aux figures 2 et 3, le dispositif de fixation 2 se présente sous la forme d'un crochet comprenant deux mâchoires 21 qui sont mobiles entre un état ouvert et un état fermé. Les mâchoires mobiles 21 sont adaptées, d'une part, pour être écartées l'une de l'autre afin de libérer l'extrémité supérieure E1 de l'élingue E à l'état ouvert et, d'autre part, pour retenir l'extrémité supérieure E1 de l'élingue E à l'état fermé. Il a été présenté un dispositif de fixation 2 se présentant sous la forme d'un crochet, cependant, il va de soi que le dispositif de fixation 2 pourrait se présenter sous toute autre forme adaptée pour fixer l'élingue E à l'hélicoptère 1.

Toujours en référence aux figures 2 et 3, le dispositif de fixation 2 comprend des moyens de commande 22 configurés pour commander l'ouverture et la fermeture des mâchoires 21. Les moyens de commande 22 peuvent être mécaniques ou électriques et sont, de préférence, activés depuis l'habitacle de l'hélicoptère 1 par un opérateur.

Comme présenté précédemment, la charge C peut comprendre du matériel à déplacer et/ou des opérateurs humains. Aussi, il est important de limiter, voire d'éliminer, le risque que la charge C soit larguée de manière accidentelle de l'hélicoptère 1 lors du transport. A cet effet, l'hélicoptère 1 est équipé d'un dispositif de sécurisation 3 selon l'invention pour retenir l'élingue E en cas d'ouverture accidentelle du dispositif de fixation 2.

En référence à la figure 4, le dispositif de sécurisation 3 comprend une première sangle 31, une deuxième sangle 32, un mécanisme de connexion 33 des sangles 31, 32 et un actionneur 34 adapté pour commander l'ouverture du mécanisme de connexion 33. La première sangle 31 s'étend longitudinalement et comporte une extrémité de solidarisation 31A adaptée pour être fixée à l'hélicoptère 1 et une extrémité de connexion 31B. De manière analogue, la deuxième sangle 32 s'étend longitudinalement et comporte une extrémité de solidarisation 32A adaptée pour être fixée à l'hélicoptère 1 et une extrémité de connexion 32B. Chaque sangle 31, 32 est souple et est réalisée, de préférence, en matière textile. Chaque sangle possède une largeur comprise entre 2 et 8 cm, de préférence, de l'ordre de 5 cm.

Le mécanisme de connexion 33 permet de connecter les extrémités de connexion 31B, 32B des sangles 31, 32 de manière à former une sangle globale de sécurisation. En utilisation, la sangle globale de sécurisation s'étend à travers la boucle de l'extrémité supérieure E1 de l'élingue E. Le mécanisme de connexion 33 permet une liaison réversible de l'élingue E afin de permettre de fixer à nouveau l'élingue E en vue d'un autre transport de charge C. A l'état fermé, la sangle globale de sécurisation possède une longueur comprise entre 50 cm et 500 cm, de préférence, entre 60 cm et 130 cm.

Lors du largage de la charge C, le mécanisme de connexion 33 doit être ouvert. La tension dans le mécanisme de connexion 33 entraine un effort de résistance à son ouverture. Aussi, pour permettre une ouverture aisée, le mécanisme de connexion 33 comprend des moyens de réduction de l'effort de résistance à l'ouverture du mécanisme de connexion 33 généré par le support de l'élingue E et de la charge C. Ceci permet ainsi de limiter l'effort entrant que doit fournir un opérateur sur l'actionneur 34 pour libérer la charge C en s'opposant à l'effort de résistance à l'ouverture.

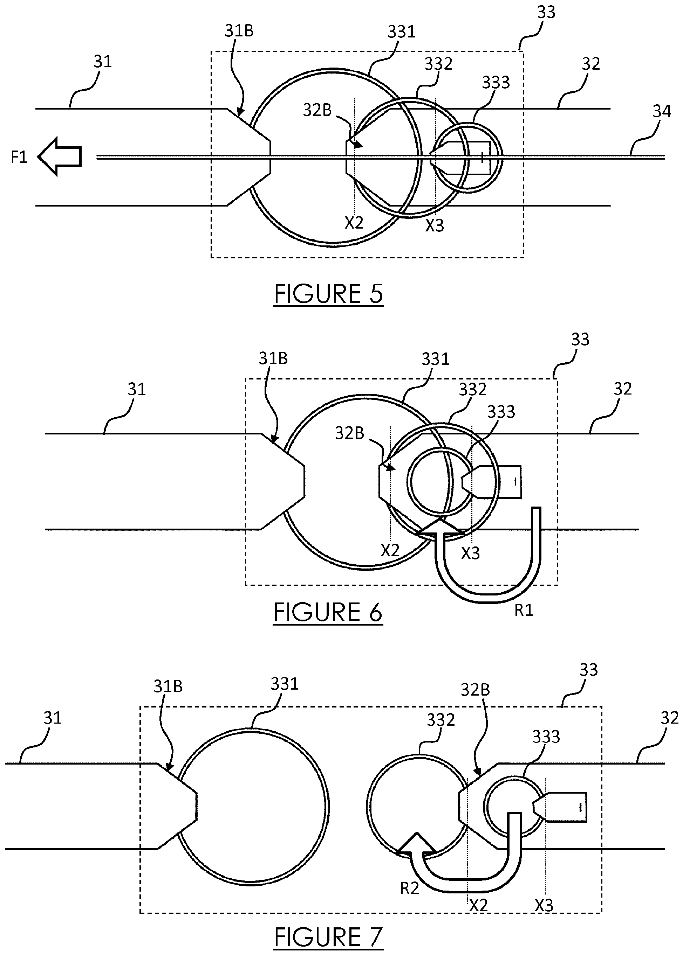

En référence aux figures 5 à 7, le mécanisme de connexion à réduction 33 comprend un premier anneau 331, un deuxième anneau 332 et un troisième anneau 333. Les anneaux 331, 332, 333 présentent une résistance mécanique élevée de manière à supporter une charge C dont la masse est élevée, notamment supérieure à 1.5 tonnes. Le premier anneau 331 présente un diamètre supérieur à celui du deuxième anneau 332. Le deuxième anneau 332 présente un diamètre supérieur à celui du troisième anneau 333. De préférence encore, le premier anneau 331 possède une épaisseur supérieure aux autres anneaux 332, 333 étant donné que le premier anneau 331 doit être dimensionné pour supporter un effort de traction très important.

Comme illustré à la figure 5, le premier anneau 331 est fixé à l'extrémité de connexion 31B de la première sangle 31 tandis que le deuxième anneau 332 et le troisième anneau 333 sont fixés à l'extrémité de connexion 32B de la deuxième sangle 32. Le deuxième anneau 332 et le troisième anneau 333 sont articulés sur la deuxième sangle 32 de manière à basculer entre une position de blocage et une position de libération. Les anneaux 332, 333 sont respectivement articulés selon des axes X2, X3 qui s'étendent orthogonalement à l'axe selon lequel s'étend la deuxième sangle 32.

En référence à la figure 5, lorsque le mécanisme de connexion 33 est fermé, le deuxième anneau 332 est rabattu en position de blocage sur le premier anneau 331 de manière à le plaquer contre la deuxième sangle 32. De même, le troisième anneau 333 est rabattu en position de blocage sur le deuxième anneau 332 de manière à le plaquer contre la deuxième sangle 32.

L'actionneur 34 bloque le troisième anneau 333 en position de blocage afin de le maintenir plaqué contre la deuxième sangle 32. Dans cet exemple, l'actionneur 34 se présente sous la forme d'un câble rigide qui est monté coulissant selon l'axe de la deuxième sangle 32 afin de bloquer le troisième anneau 333. L"actionneur 34 comporte à son extrémité une poignée pouvant être tirée manuellement par un opérateur afin de déplacer le câble et libérer le troisième anneau 333. Le montage en cascade des anneaux 331-333 permet de bloquer un anneau par un anneau de taille inférieure qui nécessite moins de force pour être déplacé. De manière avantageuse, la dimension et le nombre des anneaux peuvent être adaptés afin d'obtenir une réduction adaptée de l'effort de résistance à l'ouverture du mécanisme de connexion 33 généré par la charge C reliée à l'élingue E.

De manière incidente, on connaît dans le domaine du parachutisme un système à anneaux qui peut supporter une charge de 200 kg et qui n'est pas adaptée pour supporter une masse supérieure à 1 tonne.

En référence à la figure 5, pour ouvrir le mécanisme de connexion 33 en présence d'une charge C, l'opérateur déplace l'actionneur 34 en exerçant un effort de traction F1 et libère le troisième anneau 333. Du fait du poids de la charge C, le deuxième anneau 332 est entraîné par le premier anneau 331 solidaire de la première sangle 31. Il en résulte un mouvement de rotation R1 du troisième anneau 333 autour de l'axe X3 (Figure 6) puis un mouvement de rotation R2 du deuxième anneau 332 autour de l'axe X2 (Figure 7) afin de libérer le premier anneau 331 et permettre une déconnexion effective. Autrement dit, il s'ensuit un enchaînement en cascade des mouvements des anneaux 333, 332, 331 pour déconnecter de manière progressive les deux sangles 31, 32.

Selon un aspect préféré, le dispositif de sécurisation 3 peut comprendre un fourreau (non représenté) pour protéger les sangles 31, 32 et limiter le risque d'endommagement.

En utilisation, le dispositif de sécurisation 3 est monté sous un hélicoptère 1. Avantageusement, le câble de l'actionneur 34 est placé sous les sangles 31, 32 pour éviter d'être coincé par l'élingue E suspendue aux sangles 31, 32. Autrement dit, le câble de l'actionneur 34 et les anneaux 331-3331 sont orientés vers le bas de manière à ce que l'élingue E soit uniquement en contact avec la surface supérieure des sangles 31, 32. De plus, l'élingue E est placée du côté de la deuxième sangle 32 à laquelle sont fixés les anneaux 332, 333 dont les dimensions sont inférieures à celles de l'anneau 331 fixé à la premier sangle 31, ce qui permet de limiter le risque de blocage d'un anneau dans la boucle de l'extrémité supérieure E1 de l'élingue E lors du largage de l'élingue E.

Le dispositif de sécurisation 3 est adapté pour sécuriser, via une élingue E, une charge C dont la masse est élevée, de préférence supérieure à 1500 kg. Pour ouvrir le mécanisme de connexion 33, l'opérateur exerce un effort de traction de l'ordre de 15kg au niveau de l'actionneur 34. Aussi, le mécanisme de connexion 33 possède un facteur de réduction supérieur à 70, de préférence, supérieur à 100 pour une charge de 1500kg. De manière préférée, le dispositif de sécurisation 3 peut supporter une charge C jusqu'à 6 tonnes.

Il va maintenant être décrit un procédé de mise en place du dispositif de sécurisation 3 sur un hélicoptère 1 afin de sécuriser une élingue E reliée à un dispositif de fixation 2.

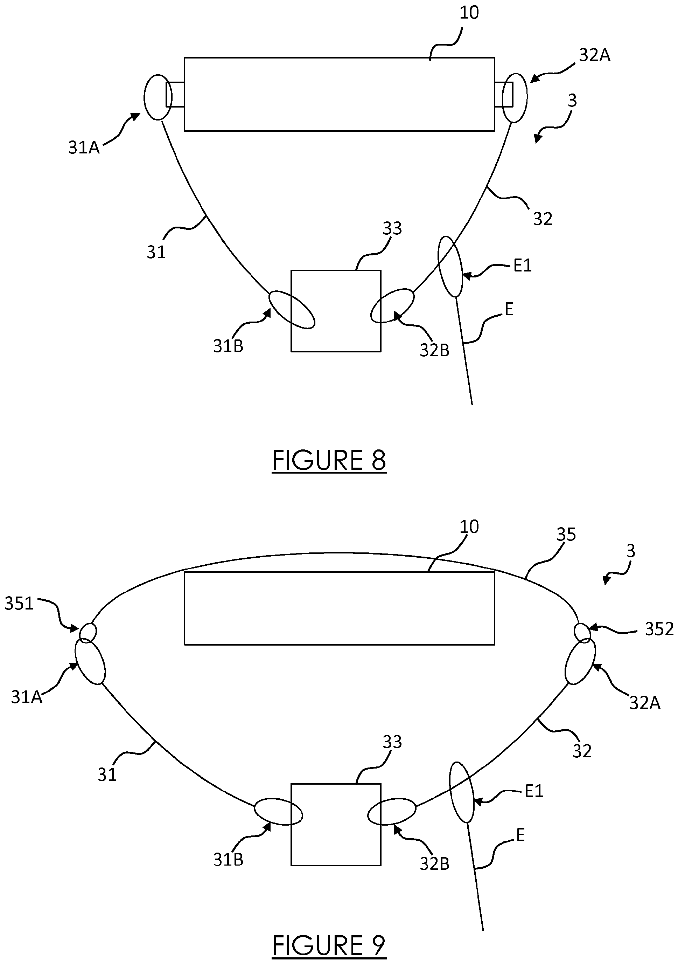

En référence à la figure 8, pour relier le dispositif de sécurisation 3 à un hélicoptère 1, les extrémités de solidarisation 31A, 32A des sangles 31, 32 sont reliées directement au châssis structural 10 de l'hélicoptère 1, par exemple par vissage ou à l'aide de crochets. Ainsi, les efforts reçus par le dispositif de sécurisation 3 sont transmis au châssis structural 10.

De manière alternative, en référence à la figure 9, le dispositif de sécurisation 3 peut être suspendu au châssis structural 10. A cet effet, le dispositif de sécurisation 3 comprend une troisième sangle 35 s'étendant longitudinalement et comprenant deux extrémités de montage 351, 352. Chaque extrémité de montage 351, 352 est adaptée pour être fixée à une extrémité de solidarisation 31A, 32A des sangles 31, 32. Ainsi, le dispositif de sécurisation 3 se présente sous la forme d'une boucle qui peut être suspendue à une partie du châssis 10 de l'hélicoptère 1. La troisième sangle 35 permet ainsi de monter de manière aisée le dispositif de sécurisation 3 sur un hélicoptère 1 ne disposant pas de moyens dédiés à la fixation des extrémités de solidarisation 31A, 32A des sangles 31, 32. Une telle troisième sangle 35 est particulièrement adaptée pour mettre en place le dispositif de sécurisation 3 sur un hélicoptère 1 existant.

Pour supporter l'élingue E, la boucle formée à la première extrémité E1 de l'élingue E est montée dans le dispositif de fixation 2 qui est ensuite fermé. Puis, les extrémités de connexion 31B, 32B du dispositif de sécurisation 3 sont ensuite connectées par le mécanisme de connexion 33 afin de former une sangle de sécurisation globale s'étendant dans la boucle formée à la première extrémité E1 de l'élingue E. Ainsi, l'élingue E est retenue par le dispositif de fixation 2 et sécurisée par le dispositif de sécurisation 3 qui est lâche.

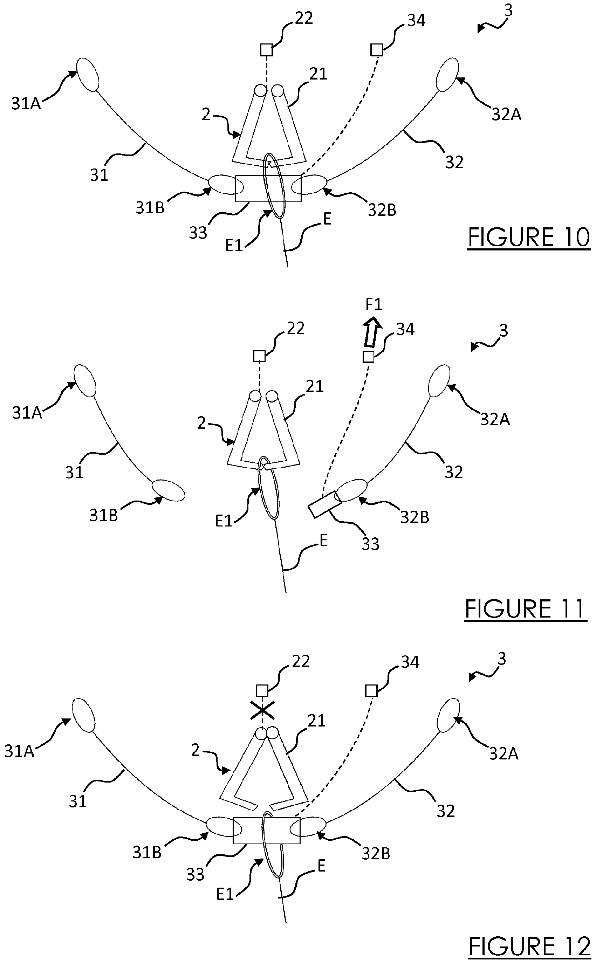

En référence aux figures 10 à 12, il va maintenant être présenté plusieurs scénarios de largage d'une charge C reliée à l'hélicoptère 1 par une élingue E. Dans cet exemple, la charge C possède une masse d'environ 1500 kg.

En référence à la figure 10, lors du transport de la charge C, le dispositif de fixation 2 et le dispositif de sécurisation 3 sont à l'état fermé de manière à sécuriser la fixation de l'élingue E à l'hélicoptère 1.

Selon un premier scénario, en référence à la figure 11, afin de larguer la charge C, un opérateur tire tout d'abord l'actionneur 34 depuis l'habitacle de l'hélicoptère 1 pour ouvrir le mécanisme de connexion 33 du dispositif de sécurisation 3. L'effort F1 à fournir par l'opérateur est réduit étant donné que la charge C reste supportée par le dispositif de fixation 2. L'opérateur peut ensuite actionner les moyens de commande 22 pour ouvrir les mâchoires 21 du dispositif de fixation 2 afin de larguer la charge C. Autrement dit, le dispositif de sécurisation 3 est désarmé de manière préliminaire afin de pouvoir larguer la charge C de manière traditionnelle suite à deux actions indépendantes d'un ou plusieurs opérateurs.

Selon un deuxième scénario, en référence à la figure 12, suite à un dysfonctionnement du dispositif de fixation 2, les mâchoires 21 s'ouvrent sans action de l'opérateur sur les moyens de commande 22. Le dispositif de sécurisation 3 reste à l'état fermé et retient l'élingue E. Ainsi, en cas d'ouverture accidentelle du dispositif de fixation 2, l'élingue E est retenue par le dispositif de sécurisation 3.

La charge C est alors supportée par le dispositif de sécurisation 3. Aussi, l'opérateur exerce un effort de traction F1 sur l'actionneur 34 supérieur à 1kg, de préférence, supérieur à 15 kg et inférieur à 20 kg, pour larguer la charge C de 1500 kg. L'effort de résistance à l'ouverture généré par la charge C est réduit par les anneaux 331-333 afin de permettre de déconnecter les sangles 31, 32 de manière progressive. Grâce au facteur de réduction du mécanisme de connexion 33, une charge C de masse importante peut être libérée grâce à un effort humain réduit. En cas de dysfonctionnement du dispositif de fixation 2, la charge C peut être larguée de manière pratique par un opérateur.

De manière avantageuse, les extrémités de connexion 31B, 32B des sangles 31, 32 peuvent être connectées de nouveau ensemble afin de réutiliser par la suite le dispositif de sécurisation 3 pour la sécurisation d'une autre charge C. Il suffit à un opérateur de positionner les anneaux 331-333 les uns par rapport aux autres afin de bloquer le premier anneau 331 et le deuxième anneau 332. Puis, il suffit à l'opérateur de mettre en place l'actionneur 34 pour bloquer le troisième anneau 333.

De plus, comme le dispositif de sécurisation 3 est mécanique, aucune modification structurelle n'est nécessaire pour son montage dans un hélicoptère. Le dispositif de sécurisation 3 peut ainsi être déployé dans tout hélicoptère existant de manière pratique, rapide et à un coût réduit. De plus, un dispositif mécanique permet d'éviter toute perturbation électromagnétique.

## Revendications

1. Dispositif de sécurisation (3) d'au moins une élingue (E) de transport d'une charge (C) sous un hélicoptère (1), ledit dispositif de sécurisation (3) comprenant :
- au moins une première sangle (31) et au moins une deuxième sangle (32), chaque sangle (31, 32) s'étendant longitudinalement et comportant une extrémité de solidarisation (31A, 32A) à l'hélicoptère (1) et une extrémité de connexion (31B, 32B),
- un mécanisme de connexion (33) configuré pour, à l'état fermé, relier des extrémités de connexion (31B, 32B) des sangles (31, 32) pour former une sangle globale de sécurisation apte à supporter une élingue (E) et, à l'état ouvert, libérer les extrémités de connexion (31B, 32B) des sangles (31, 32) pour larguer l'élingue (E), le mécanisme de connexion (33) étant adapté pour résister à l'état fermé à un effort de traction de 1500kg, et
- un actionneur (34) configuré pour ouvrir le mécanisme de connexion (33) suite à un effort mécanique entrant (F1), le mécanisme de connexion (33) comprenant une pluralité d'anneaux (331, 332, 333) montés en cascade configurés pour réduire l'effort de résistance à l'ouverture du mécanisme de connexion (33) induit par le support de l'élingue (E) de manière à ce que l'effort mécanique entrant (F1) soit inférieur à 20kg pour un effort de traction de 1500kg induit par le support de l'élingue (E), le mécanisme de connexion (33) comprend au moins un premier anneau (331), un deuxième anneau (332) et un troisième anneau (333), le premier anneau (331) présentant un diamètre supérieurà celui du deuxième anneau (332) et le deuxième anneau (332) présentant un diamètre supérieur à celui du troisième anneau (333), le premier anneau (331) étant articulé au niveau de l'extrémité de connexion (31B) de la première sangle (31) tandis que le deuxième et troisième anneaux (332, 333) sont articulés au niveau de l'extrémité de connexion (32B) de la deuxième sangle (32).

2. Dispositif (3) selon la revendication 1, dans lequel le mécanisme de connexion (33) est configuré pour résister à un effort de traction de 5 000 kg, de préférence encore 6 000 kg.

3. Dispositif (3) selon l'une des revendications précédentes, dans lequel le mécanisme de connexion (33) est configuré pour réduire l'effort de résistance à l'ouverture du mécanisme de connexion (33) généré par la charge (C) reliée à l'élingue (E) par un facteur de réduction supérieur à 70, de préférence, supérieur à 100, pour une charge (C) de l'ordre de 1500kg.

4. Dispositif (3) selon l'une des revendications précédentes, dans lequel l'actionneur (34) est adapté pour recevoir un effort mécanique entrant de traction (F1) par un opérateur.

5. Dispositif (3) selon l'une des revendications précédentes, dans lequel l'effort mécanique entrant (F1) est supérieur à 1kg, de préférence supérieur à 5 kg, de préférence de l'ordre de 15kg pour une charge (C) de l'ordre de 1500kg.

6. Dispositif (3) selon l'une des revendications précédentes, comprenant une troisième sangle (35) adaptée pour se connecter aux extrémités de solidarisation (31A, 32A) de la première et de la deuxième sangle (31, 32) de manière à former une boucle de sécurisation adaptée pour être suspendue à une partie de l'hélicoptère (1).

7. Hélicoptère (1) comprenant un châssis structural (10), un dispositif de fixation (2), fixé au châssis structural (10), configuré pour supporter une élingue (E) et la libérer de manière commandée, et un dispositif de sécurisation (3) selon l'une des revendications précédentes, dont les extrémités de solidarisation (31A, 32A) de la première et de la deuxième sangle (31, 32) sont fixées audit châssis structural (10) pour sécuriser le support de l'élingue (E) par l'hélicoptère (1).

8. Procédé de sécurisation d'une élingue (E) montée sous un hélicoptère (1) selon la revendication 7, le procédé comprenant :
- une étape de liaison du dispositif de fixation (2) à une élingue (E), et
- une étape de liaison du dispositif de sécurisation (3) à l'élingue (E) de manière à sécuriser son support par l'hélicoptère (1).

## Patentansprüche

1. Vorrichtung zum Sichern (3) von wenigstens einer Schlinge (E) zum Transportieren einer Last (C) unter einem Hubschrauber (1), wobei die Sicherungsvorrichtung (3) umfasst:
- wenigstens einen ersten Gurt (31) und wenigstens einen zweiten Gurt (32), wobei sich jeder Gurt (31, 32) längs erstreckt und ein Ende zum festen Verbinden (31A, 32A) am Hubschrauber (1) und ein Verbindungsende (31B, 32B) aufweist,
- einen Verbindungsmechanismus (33), der ausgelegt ist, um im geschlossenen Zustand Verbindungsenden (31B, 32B) der Gurte (31, 32) zusammenzuführen, um einen globalen Sicherungsgurt zu bilden, der imstande ist, eine Schlinge (E) zu halten, und im geöffneten Zustand die Verbindungsenden (31B, 32B) der Gurte (31, 32) freizugeben, um die Schlinge (E) zu lösen, wobei der Verbindungsmechanismus (33) geeignet ist, im geschlossenen Zustand einer Zugkraft von 1.500 kg zu widerstehen, und
- einen Aktuator (34), der ausgelegt ist, um den Verbindungsmechanismus (33) infolge einer eintretenden mechanischen Kraft (F1) zu öffnen, wobei der Verbindungsmechanismus (33) eine Vielzahl von Ringen (331, 332, 333) umfasst, die reihenweise angebracht sind, die ausgelegt sind, um die Widerstandskraft gegenüber der Öffnung Verbindungsmechanismus (33) zu reduzieren, die von dem Halter der Schlinge (E) hervorgerufen wird, so dass die eintretende mechanische Kraft (F1) unter 20 kg für eine Zugkraft von 1.500 kg beträgt, die von dem Halter der Schlinge (E) hervorgerufen wird, wobei der Verbindungsmechanismus (33) wenigstens einen ersten Ring (331), einen zweiten Ring (332) und einen dritten Ring (333) umfasst, wobei der erste Ring (331) einen größeren Durchmesser als der zweite Ring (332) aufweist und der zweite Ring (332) einen größeren Durchmesser als der dritte Ring (333) aufweist, wobei der erste Ring (331) im Bereich des Verbindungsendes (31B) des ersten Gurts (31) angelenkt ist, wohingegen der zweite und dritte Ring (332, 333) im Bereich des Verbindungsendes (32B) des zweiten Gurts (32) angelenkt sind.

2. Vorrichtung (3) nach Anspruch 1, wobei der Verbindungsmechanismus (33) ausgelegt ist, um einer Zugkraft von 5.000 kg, vorzugsweise auch von 6.000 kg, zu widerstehen.

3. Vorrichtung (3) nach einem der vorangehenden Ansprüche, wobei der Verbindungsmechanismus (33) ausgelegt ist, um die von der Last (C), die mit der Schlinge (E) verbunden ist, erzeugte Widerstandskraft gegenüber der Öffnung des Verbindungsmechanismus (33) für eine Last (C) in der Größenordnung von 1.500 kg durch einen Reduktionsfaktor zu reduzieren, der größer als 70, vorzugsweise größer als 100 ist.

4. Vorrichtung (3) nach einem der vorangehenden Ansprüche, wobei der Aktuator (34) geeignet ist, eine von einem Bediener eintretende mechanischen Zugkraft (F1) zu empfangen.

5. Vorrichtung (3) nach einem der vorangehenden Ansprüche, wobei die eintretende mechanische Kraft (F1) für eine Last (C) in der Größenordnung von 1.500 kg größer als 1 kg, vorzugsweise größer als 5 kg ist, vorzugsweise in der Größenordnung von 15 kg liegt.

6. Vorrichtung (3) nach einem der vorangehenden Ansprüche, umfassend einen dritten Gurt (35), der geeignet ist, sich mit den Enden zum festen Verbinden (31A, 32A) des ersten und des zweiten Gurts (31, 32) zu verbinden, so dass eine Sicherungsschlaufe gebildet wird, die zum Anhängen an einen Teil des Hubschraubers (1) geeignet ist.

7. Hubschrauber (1), umfassend einen Strukturrahmen (10), eine Fixiervorrichtung (2), die am Strukturrahmen (10) fixiert ist, die ausgelegt ist, um eine Schlinge (E) zu halten und sie kontrolliert freizugeben, und eine Sicherungsvorrichtung (3) nach einem der vorangehenden Ansprüche, deren Enden zum festen Verbinden (31A, 32A) des ersten und des zweiten Gurts (31, 32) am Strukturrahmen (10) fixiert sind, um den Halter der Schlinge (E) durch den Hubschrauber (1) zu sichern.

8. Verfahren zum Sichern einer Schlinge (E), die unter einem Hubschrauber (1) nach Anspruch 7 angebracht ist, wobei das Verfahren umfasst:
- einen Verbindungsschritt der Fixiervorrichtung (2) mit einer Schlinge (E), und
- einen Verbindungsschritt der Sicherungsvorrichtung (3) an der Schlinge (E), so dass ihr Halter durch den Hubschrauber (1) gesichert ist.

## Claims

1. Device for securing (3) at least one sling (E) for transporting a load (C) under a helicopter (1), said securing device (3) comprising:
- at least one first strap (31) and at least one second strap (32), each strap (31, 32) extending longitudinally and comprising an end for joining (31A, 32A) to the helicopter (1) and a connecting end (31B, 32B),
- a connecting mechanism (33) configured, in a closed state, to connect the connecting ends (31B, 32B) of the straps (31, 32) to form an overall securing strap capable of supporting a sling (E) and, in a open state, to release the connecting ends (31B, 32B) of the straps (31, 32) to drop the sling (E), the connecting mechanism (33) being suited to withstand in the closed state a tractive force of 1500 kg, and
- an actuator (34) configured to open the connecting mechanism (33) following an input of mechanical force (F1), the connecting mechanism (33) comprising a plurality of rings (331, 332, 333) mounted in cascade configured to reduce the force of resistance to the opening of the connecting mechanism (33) induced by the support of the sling (E) so that the input mechanical force (F1) is less than 20 kg for a tractive force of 1500 kg induced by the support of the sling (E), the connecting mechanism (33) comprises at least a first ring (331), a second ring (332) and a third ring (333), the first ring (331) having a diameter greater than that of the second ring (332) and the second ring (332) having a diameter greater than that of the third ring (333), the first ring (331) being hinged at the level of the connecting end (31B) of the first strap (31) whereas the second and third rings (332, 333) are hinged at the level of the connecting end (32B) of the second strap (32).

2. Device (3) according to claim 1, in which the connecting mechanism (33) is configured to withstand a tractive force of 5000 kg, further preferably 6000 kg.

3. Device (3) according to one of the preceding claims, in which the connecting mechanism (33) is configured to reduce the force resisting the opening of the connecting mechanism (33) generated by the load (C) connected to the sling (E) by a reduction factor greater than 70, preferably, greater than 100, for a load (C) of the order of 1500 kg.

4. Device (3) according to one of the preceding claims, in which the actuator (34) is suited to receiving an input of mechanical tractive force (F1) by an operator.

5. Device (3) according to one of the preceding claims, in which the input mechanical force (F1) is greater than 1 kg, preferably greater than 5 kg, preferably of the order of 15 kg for a load (C) of the order of 1500 kg.

6. Device (3) according to one of the preceding claims, comprising a third strap (35) suited to being connected to the ends for joining (31A, 32A) the first and the second strap (31, 32) so as to form a securing loop suited to being suspended from a part of the helicopter (1).

7. Helicopter (1) comprising a structural chassis (10), a fastening device (2), fastened to the structural chassis (10), configured to support a sling (E) and to release it in a controlled manner, and a securing device (3) according to one of the preceding claims, of which the ends for joining (31A, 32A) the first and second strap (31, 32) are fastened to said structural chassis (10) for securing the support of the sling (E) by the helicopter (1).

8. Method for securing a sling (E) mounted under a helicopter (1) according to claim 7, the method comprising:
- a step of linking the fastening device (2) to a sling (E), and
- a step of linking the securing device (3) to the sling (E) so as to secure its support by the helicopter (1).
